(19) **Europäisches Patentamt**
**European Patent Office**
**Office européen des brevets**

(11) **EP 4 552 782 A1**

(12) **EUROPEAN PATENT APPLICATION**

(43) Date of publication:
14.05.2025 Bulletin 2025/20

(21) Application number: 24209052.0

(22) Date of filing: 25.10.2024

(51) International Patent Classification (IPC):
*B23K 9/095* (2006.01)    *B23K 9/10* (2006.01)

(52) Cooperative Patent Classification (CPC):
B23K 9/0953; B23K 9/1006

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.10.2023 US 202363593701 P
23.10.2024 US 202418924597

(71) Applicant: **Illinois Tool Works Inc.**
Glenview IL 60025 (US)

(72) Inventors:
• **VHANESA, Aditya Rajeshkumar**
Glenview, 60025 (US)
• **HEIMMERMANN, Noah Eldren**
Glenview, 60025 (US)
• **JOYCE, Richard**
Glenview, 60025 (US)

(74) Representative: **HGF**
HGF Limited
1 City Walk
Leeds LS11 9DX (GB)

(54) **WELDING POWER SUPPLIES TO COMPENSATE A WELD VOLTAGE VIA COMMUNICATIONS OVER A WELD CIRCUIT**

(57) Disclosed example welding-type power supplies include: a power converter; a receiver circuit configured to receive weld voltage feedback information measured at a device remote from the power supply while current is flowing through a weld circuit; and a controller configured to: for an initial weld performed with a weld circuit element: determine an estimated weld circuit resistance value based on a characteristic of the weld circuit element; and control the power converter according to a voltage feedback loop based on the estimated weld circuit resistance value; and for a subsequent weld performed with the weld circuit element: determine a measured weld circuit resistance value based on the weld voltage feedback information; and control the power converter according to a voltage feedback loop based on the measured weld circuit resistance value to regulate a weld voltage at the remote device to the weld voltage setpoint.

FIG. 1

EP 4 552 782 A1

## Description

RELATED APPLICATIONS

The present application claims the benefit of U.S. Provisional Patent Application Serial No. 63/593,701, filed October 27, 2023, entitled "WELDING POWER SUPPLIES, WIRE FEEDERS, AND SYSTEMS TO COMPENSATE A WELD VOLTAGE VIA COMMUNICATIONS OVER A WELD CIRCUIT." The entirety of U.S. Provisional Patent Application Serial No. 63/593,701 is expressly incorporated herein by reference.

FIELD OF THE DISCLOSURE

This disclosure relates generally to welding systems and, more particularly, to welding power supplies, wire feeders, and systems to compensate a weld voltage via communications over a weld circuit.

BACKGROUND

Some welding applications, such as coal-fired boiler repair, shipyard work, and so forth, may position a welding location or workpiece large distances from a multi-process welding power source. The power source provides conditioned power for the welding application, and the welder must pull and monitor a long welding power cable extending from the power source to the welding location. Accordingly, the location of power terminals (e.g., plugs) and controls on or proximate to the welding power source may require the user to stop welding and return to the power source to plug in auxiliary devices, make changes to the welding process, and so forth. In many applications, this may entail walking back considerable distances, through sometimes complex and intricate work environments. Additionally, weld cables (and, particularly, long weld cables) introduce a non-negligible voltage drop between the power source and the site of the work (e.g., the wire feeder, the torch).

Accordingly, there exists a need for systems and methods for providing accurate weld voltages that correspond to the weld voltages set on the weld equipment, and particularly without requiring additional communications cables or using wireless communications equipment that can be unreliable in a weld environment.

SUMMARY

Welding power supplies, wire feeders, and systems to compensate a weld voltage via communications over a weld circuit are disclosed, substantially as illustrated by and described in connection with at least one of the figures, as set forth more completely in the claims.

BRIEF DESCRIPTION OF THE DRAWINGS

FIG. 1 shows an example welding-type system in accordance with aspects of this disclosure.

FIG. 2 is a block diagram of an example voltage feedback control loop that may be implemented by the controller of FIG. 1 to control a power converter in accordance with aspects of this disclosure..

FIG. 3 is a flowchart illustrating example machine readable instructions which may be executed by the example welding-type power supply of FIG. 1 to compensate welding output voltage in accordance with aspects of this disclosure.

The drawings are not necessarily to scale. Where appropriate, similar or identical reference numbers are used to refer to similar or identical components.

DETAILED DESCRIPTION

Weld cable communications enable components of welding systems, such as a welding power supply and a wire feeder, to communicate via a same cable used to deliver welding current from the power supply to the wire feeder (and to a welding torch attached to the wire feeder). Weld cable communications enable a simplification of a welding system by, for example, removing one or more cables that were conventionally used for control signals.

Disclosed examples provide for a voltage sensing wire feeder for welding that enables a welding power supply to adjust an arc voltage (e.g., a voltage across an arc, between the electrode and the workpiece) to compensate for the voltage drop over the weld cable between the welding power supply and a remote wire feeder. As used herein, the term "remote" refers to not being in a same physical enclosure. For example, a wire feeder that is separate from a welding power supply (e.g., connected to the welding power supply by a weld cable) is considered a remote wire feeder for the purposes of this disclosure.

In some examples, a remote wire feeder measures the arc voltage and communicates the arc voltage to the power supply via the weld circuit as weld voltage feedback information while the weld circuit is conducting weld current (e.g., during a weld operation), which enables the power supply to adjust the voltage and/or current output by the power supply. For example, the power supply may adjust the voltage and/or current to reduce or minimize a difference between the actual (e.g., measured) arc voltage and a weld voltage setpoint. In some other examples, the remote wire feeder stores the voltage measurements in an internal memory and transmits the voltage measurements to the power supply when the welding operation has completed.

Disclosed example power supplies execute a weld voltage control loop, and use the voltage measurements from the remote wire feeder as a feedback mechanism in the control loop to adjust the output power. In some examples, the power supply calculates a profile of the weld cable and/or the weld circuit, which is used during subsequent welds to compensate the output power to result in the arc voltage being substantially equal to the weld voltage setpoint. Thus, disclosed examples provide more predictable and reliable weld voltages to a welder.

Some conventional power supplies and welders communicate using control cables that are separate from the weld circuit. However, such control cables are fragile, expensive, and cause additional hazards in a welding environment, particularly when there are relatively long distances (e.g., 100 feet or more) between the power supply and the remote wire feeder. Furthermore, while some conventional power supplies measure the cable resistance or inductance using calibration techniques or voltage measurements, the initial weld using a welding cable is subject to arc voltages that are not compensated for the cable resistance. Disclosed examples enable voltage compensation by the power supply for both an initial weld using a weld cable and for subsequent welds. Disclosed example systems and methods estimate the weld cable resistance for an initial weld, such as when an operator connects a new or different welding cable to the power supply, based on user input describing the welding cable. For example, the user may input the cable length, cable size (e.g., gauge), cable model number, cable serial number, and/or any other information that may describe the cable. Based on the user input, disclosed example systems and methods estimate the resistance of the weld cable, and can compensate the welding output voltage such that the arc voltage is closer to the voltage setpoint set by the operator. During the initial weld and/or subsequent welds, the power supply and a connected wire feeder perform voltage measurements of the weld circuit at different locations on the weld circuit. Using the voltage measurements and a corresponding current measurement, disclosed example systems and methods calculate a resistance of the weld cable (or other portion of the weld circuit), and can compensate the welding output voltage according to the calculated resistance.

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "weld voltage setpoint" refers to a voltage input to the power converter via a user interface, network communication, weld procedure specification, or other selection method.

As used herein, a "circuit" includes any analog and/or digital components, power and/or control elements, such as a microprocessor, digital signal processor (DSP), software, and the like, discrete and/or integrated components, or portions and/or combinations thereof.

As used herein, the term "weld circuit" includes any and all components in an electrical path of a welding operation, regardless whether the welding operation is underway. For example, the weld circuit is considered to include any or all of: power conversion and/or conditioning component(s), weld cable conductor(s), weld torch(es), consumable or non-consumable welding electrode(s), workpiece(s), work clamp(s), ground cable(s) (return cables), weld cable connections (e.g., weld studs that connect a welding power supply to a weld cable). As used herein, the "weld circuit" does not include components or conductors that do not conduct weld current at any time (i.e., that are not in the electrical path of the weld current). For example, the weld circuit does not include separate control cables that transmit data but do not transmit weld current.

As used herein, the term "filtering," as it applies to voltage and/or current values, refers to generating one or more representative values from a larger set of values. For example, a set of voltage values or measurements may be filtered to obtain an average voltage, a root-mean-square value of the voltage values, or any other representative or derivative value(s).

Disclosed example welding-type power supplies include: a power converter configured to convert input power to welding-type power based on a weld voltage setpoint and to output the welding-type power via a weld circuit; a receiver circuit configured to receive a communication via the weld circuit while current is flowing through the weld circuit or after the current has stopped flowing through the weld circuit, the communication including weld voltage feedback information measured at a device remote from the power supply while the current is flowing through the weld circuit; and a controller configured to: for an initial weld performed with a weld circuit element: determine an estimated weld circuit resistance value based on a characteristic of the weld circuit element; and control the power converter according to a voltage feedback loop based on the estimated weld circuit resistance value; and for a subsequent weld performed with the weld circuit element: determine a calculated weld circuit resistance value based on the weld voltage feedback information; and control the power converter according to the voltage feedback loop based on the calculated weld circuit resistance value to regulate a weld voltage at the remote device to the weld voltage setpoint.

In some example welding-type power supplies, the weld circuit element includes a weld cable in the weld circuit or a work cable in the weld circuit. In some example welding-type power supplies, the characteristic includes at least one of a cable length, a cable size, a model identifier of the weld cable, or a serial number of the weld cable. In some example welding-type power supplies, the controller is configured to determine the estimated weld circuit resistance value based on the characteristic using a lookup table.

Some example welding-type power supplies further include a voltage monitor configured to measure a voltage of the welding-type power, wherein the voltage feedback loop is based on the measured voltage. Some example welding-type power supplies further include a current sensor configured to measure a current of the welding-type power, in which the voltage feedback loop is based on the measured current. In some example welding-type power supplies, the controller is configured to determine the calculated weld circuit resistance value based on the measured voltage, the measured current, and the weld voltage feedback information.

In some example welding-type power supplies, the weld voltage feedback information includes a filtered arc voltage of the welding-type power measured at a wire feeder, the voltage monitor is to determine a filtered power supply output voltage of the welding-type power measured at an output terminal of the welding-type power supply, and the controller is to adjust the weld voltage of the welding-type power based on a difference between the filtered arc voltage and the filtered power supply output voltage.

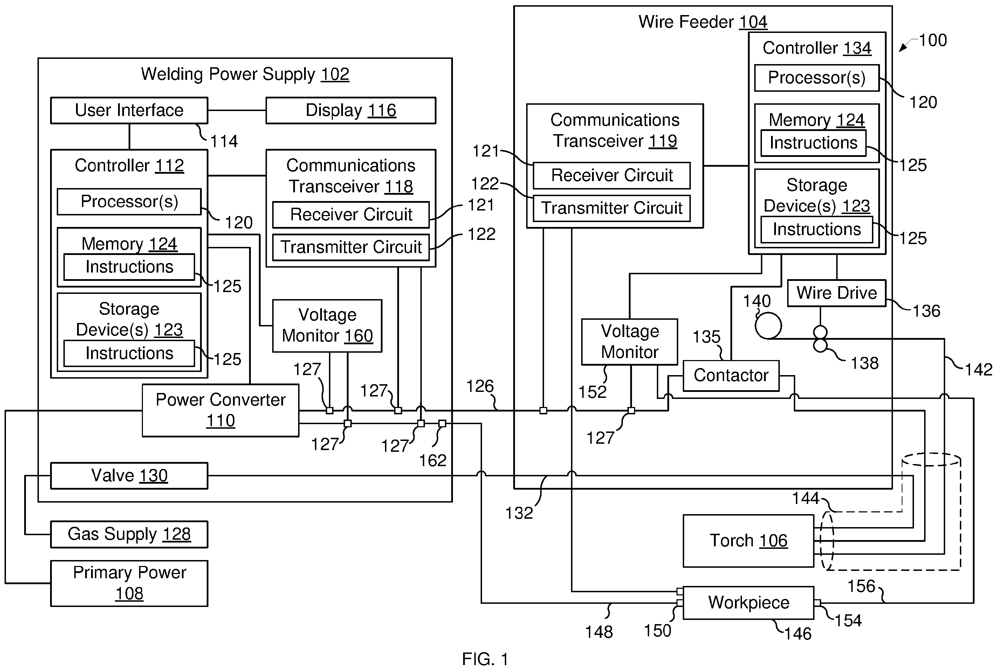

Turning now to the drawings, FIG. 1 is a block diagram of an example welding system 100 having a welding power supply 102, a wire feeder 104, and a welding torch 106. The welding system 100 powers, controls, and supplies consumables to a welding application. In some examples, the welding power supply 102 directly supplies input power to the welding torch 106. The welding torch 106 may be a torch configured for shielded metal arc welding (SMAW, or stick welding), tungsten inert gas (TIG) welding, gas metal arc welding (GMAW), flux cored arc welding (FCAW), based on the desired welding application. In the illustrated example, the welding power supply 102 is configured to supply power to the wire feeder 104, and the wire feeder 104 may be configured to route the input power to the welding torch 106. In addition to supplying an input power, the wire feeder 104 may supply a filler metal to a welding torch 106 for various welding applications (e.g., GMAW welding, flux core arc welding (FCAW)). While the example system 100 of FIG. 1 includes a wire feeder 104 (e.g., for GMAW or FCAW welding), the wire feeder 104 may be replaced by any other type of remote accessory device, such as a stick welding and/or TIG welding remote control interface that provides stick and/or TIG welding.

The welding power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The welding power supply 102 includes a power converter 110, which may include transformers, rectifiers, switches, and so forth, capable of converting the AC input power to AC and/or DC output power as dictated by the demands of the system 100 (e.g., particular welding processes and regimes). The power converter 110 converts input power (e.g., the primary power 108) to welding-type power based on a weld voltage setpoint and outputs the welding-type power via a weld circuit.

In some examples, the power converter 110 is configured to convert the primary power 108 to both welding-type power and auxiliary power outputs. However, in other examples, the power converter 110 is adapted to convert primary power only to a weld power output, and a separate auxiliary converter is provided to convert primary power to auxiliary power. In some other examples, the welding power supply 102 receives a converted auxiliary power output directly from a wall outlet. Any suitable power conversion system or mechanism may be employed by the welding power supply 102 to generate and supply both weld and auxiliary power.

The welding power supply 102 includes a controller 112 to control the operation of the welding power supply 102. The welding power supply 102 also includes a user interface 114. The controller 112 receives input from the user interface 114, through which a user may choose a process and/or input desired parameters (e.g., voltages, currents, particular pulsed or non-pulsed welding regimes, and so forth). The user interface 114 may receive inputs using any input device, such as via a keypad, keyboard, buttons, touch screen, voice activation system, wireless device, etc. Furthermore, the controller 112 controls operating parameters based on input by the user as well as based on other current operating parameters. Specifically, the user interface 114 may include a display 116 for presenting, showing, or indicating, information to an operator. The controller 112 may also include interface circuitry for communicating data to other devices in the system 100, such as the wire feeder 104. For example, in some situations, the welding power supply 102 wirelessly communicates with other welding devices within the welding system 100. Further, in some situations, the welding power supply 102 communicates with other welding devices using a wired connection, such as by using a network interface controller (NIC) to communicate data via a network (e.g., ETHERNET, 10baseT, 10base100, etc.). In the example of FIG. 1, the controller 112 communicates with the wire feeder 104 via the weld circuit via a communications transceiver 118, as described below.

The controller 112 includes at least one controller or processor 120 that controls the operations of the welding power supply 102. The controller 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The example controller 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power converter 110 through a weld cable 126 to the wire feeder 104 and the welding torch 106. The example weld cable 126 is attachable and detachable from weld studs at each of the welding power supply 102 and the wire feeder 104 (e.g., to enable ease of replacement of the weld cable 126 in case of wear or damage). Furthermore, in some examples, welding data is provided with the weld cable 126 such that welding power and weld data are provided and transmitted together over the weld cable 126. The communications transceiver 118 is communicatively coupled to the weld cable 126 to communicate (e.g., send/receive) data over the weld cable 126. The communications transceiver 118 may be implemented based on various types of power line communications methods and techniques. For example, the communications transceiver 118 may utilize IEEE standard P1901.2 to provide data communications over the weld cable 36. In this manner, the weld cable 126 may be utilized to provide welding power from the welding power supply 102 to the wire feeder 104 and the welding torch 106. Additionally or alternatively, the weld cable 126 may be used to transmit and/or receive data communications to/from the wire feeder 104 and the welding torch 106. The communications transceiver 118 is communicatively coupled to the weld cable 126, for example, via cable data couplers 127, to characterize the weld cable 126, as described in more detail below. The cable data coupler 127 may be, for example, a voltage or current sensor.

The example communications transceiver 118 includes a receiver circuit 121 and a transmitter circuit 122. Generally, the receiver circuit 121 receives data transmitted by the wire feeder 104 via the weld cable 126 and the transmitter circuit 122 transmits data to the wire feeder 104 via the weld cable 126. As described in more detail below, the communications transceiver 118 enables remote configuration of the power supply 102 from the location of the wire feeder 104 and/or compensation of weld voltages by the power supply 102 using weld voltage feedback information transmitted by the wire feeder 104. In some examples, the receiver circuit 121 receives communication(s) via the weld circuit while weld current is flowing through the weld circuit (e.g., during a welding-type operation) and/or after the weld current has stopped flowing through the weld circuit (e.g., after a welding-type operation). Examples of such communications include weld voltage feedback information measured at a device that is remote from the power supply 102 (e.g., the wire feeder 104) while the weld current is flowing through the weld circuit.

Example implementations of the communications transceiver 118 are described in U.S. Patent No. 9,012,807. The entirety of U.S. Patent No. 9,012,807 is incorporated herein by reference. However, other implementations of the communications transceiver 118 may be used.

The example wire feeder 104 also includes a communications transceiver 119, which may be similar or identical in construction and/or function as the communications transceiver 118.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 22 to enable, inhibit, or control gas flow (e.g., shielding gas) through the valve 130. Shielding gas exits the valve 130 and flows through a cable 132 (which in some implementations may be packaged with the welding power output) to the wire feeder 104 which provides the shielding gas to the welding application. In some examples, the welding system 100 does not include the gas supply 128, the valve 130, and/or the cable 132.

In some examples, the wire feeder 104 uses the welding power to power the various components in the wire feeder 104, such as to power a wire feeder controller 134. As noted above, the weld cable 126 may be configured to provide or supply the welding power. The welding power supply 102 may also communicate with a communications transceiver 119 of the wire feeder 104 using the weld cable 126 and the communications transceiver 118 disposed within the welding power supply 102. In some examples, the communications transceiver 119 is substantially similar to the communications transceiver 118 of the welding power supply 102. The wire feeder controller 134 controls the operations of the wire feeder 104. In some examples, the wire feeder 104 uses the wire feeder controller 134 to detect whether the wire feeder 104 is in communication with the welding power supply 102 and to detect a current welding process of the welding power supply 102 if the wire feeder 104 is in communication with the welding power supply 102.

A contactor 135 (e.g., high amperage relay) is controlled by the wire feeder controller 134 and configured to enable or inhibit welding power to continue to flow to the weld cable 126 for the welding application. In some examples, the contactor 135 is an electromechanical device. However, the contactor 135 may be any other suitable device, such as a solid state device. The wire feeder 104 includes a wire drive 136 that receives control signals from the wire feeder controller 134 to drive rollers 138 that rotate to pull wire off a spool 140 of wire. The wire is provided to the welding application through a torch cable 142. Likewise, the wire feeder 104 may provide the shielding gas from the cable 132 through the cable 142. The electrode wire, the shield gas, and the power from the weld cable 126 are bundled together in a single torch cable 144 and/or individually provided to the welding torch 106.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power supply 102 (e.g., to the power converter 110) to provide a return path for the weld current (e.g., as part of the weld circuit). The example work cable 148 attachable and/or detachable from the power supply 102 for ease of replacement of the work cable 148. The work cable 148 may be terminated with a clamp 150 (or another power connecting device), which couples the welding power supply 102 to the workpiece 146.

The example wire feeder 104 of FIG. 1 includes a voltage monitor 152 coupled to the weld circuit (e.g., electrically connected to the weld cable 126) and to the workpiece 146 via a clamp 154 and a sense lead 156. The example voltage monitor 152 may be coupled to the weld circuit via a cable data coupler 127. The voltage monitor 152 measures a weld voltage, such as the voltage between the output to the torch 106 (e.g., at a weld output connector or stud to which the cable 144 is connected to electrically connect the torch 106 to the wire feeder 104) and the workpiece 146 (e.g., via the sense lead 156). Because the wire feeder 104 is significantly closer to the arc than the power supply 102 is to the arc, the voltage measured at the wire feeder 104 is not affected by the resistance of the weld cable 126. As a result, the measurements captured by the voltage monitor 152 can be considered to be representative of the arc voltage.

The voltage monitor 152 captures one or more measurements (e.g., samples) of the weld voltage (e.g., the arc voltage, the voltage between the torch 106 and the workpiece 146). In some examples, the voltage monitor 152 assigns time stamps to the measurements for use in performing calculations, compensation, and/or matching of measurements to other measurements.

The example voltage monitor 152 and/or the controller 134 perform filtering (e.g., analog and/or digital filtering) to determine a representative value of the voltage over a designated time period. The representative value may be a filtered voltage value based on the measurements captured by the voltage monitor 152, such as an average voltage over the designated time period or a root-mean-square voltage over the designated time period. For example, the voltage monitor 152 and/or the controller 134 may calculate an average weld voltage for an N second time period based on a corresponding number of measurements captured by the voltage monitor 152 at a designated rate. In some examples, the time period for filtering is selected based on the switching frequency of the power converter 110 and/or a processing frequency used by the controller 134 and/or the processor(s) 120.

The example controller 134 stores the average weld voltage(s) and/or the voltage measurement(s) as weld voltage feedback information. The communications transceiver 119 transmits the weld voltage feedback information to the power supply 102 via the weld circuit (e.g., via the weld cable 126). The communications transceiver 119 may transmit the weld voltage feedback information while the weld circuit is conducting welding current (e.g., during a welding operation and/or while an arc is present between the torch 106 and the workpiece 146) and/or after the welding current is finished (e.g., at the conclusion of the welding operation during which the voltage monitor 152 captured the voltage measurements).

When the welding power supply 102 receives the voltage measurements, the power supply 102 updates a voltage feedback loop for controlling the power converter 110. The voltage feedback loop may be executed by the example controller 112 of FIG. 1. An example voltage feedback loop is a control algorithm that controls an output voltage using an input value and which is responsive to the output voltage and/or an intermediate signal associated with the output voltage. The controller 112 controls the welding-type power output by the power converter 110 according to a voltage feedback loop using the weld voltage feedback information to regulate the voltage at the remote device (e.g., at the wire feeder 104) to the weld voltage setpoint. For example, the controller 112 may use data received from the wire feeder 104 via the weld circuit to control the weld voltage at the arc to substantially equal the voltage setpoint (e.g., to compensate for the voltage drop caused by the weld cable 126).

The example power supply 102 includes a voltage monitor 160 that measures an actual power source output voltage. The actual power source output voltage is an approximation that is substantially equal to, but may be slightly different (e.g., a negligible difference) than, the real voltage that is output from the power source to the weld cable 126. The controller 112 may execute a feedback loop using the actual power source output voltage as an input. In some examples, the voltage monitor 160 is included in the power converter 110.

In some examples, the controller 112 receives an average arc voltage of the welding-type power measured at the wire feeder 104, and the voltage monitor 160 determines an average output voltage of the welding-type power measured at an output terminal of the power supply 102. The controller 112 adjusts a weld voltage of the welding-type power based on a difference between the average arc voltage and the average power supply output voltage.

In some examples, the voltage feedback loop is a constant voltage (CV) or voltage-controlled control loop. The example controller 112 calculates a current adjustment using a set of measurable and/or derivable voltage values.

As mentioned above, the weld cable 126 between the power supply 102 and the wire feeder 104 causes a voltage drop. The voltage drop caused by the weld cable 126 ($V_{cabledrop}$) can be expressed as a difference between a voltage measured at the power supply output (e.g., $V_{stud}$, measured across the power supply output studs) and a voltage measured at the wire feeder 104 (e.g., $V_{feeder}$), as expressed in Equation 1 below. The $V_{feeder}$ term is received as the weld voltage feedback information, such as a weld voltage measurement and/or average weld voltage determined by the wire feeder 104 and communicated via the weld cable 126.

$$V_{cableDrop} = V_{stud} - V_{feeder} \qquad \text{Equation 1}$$

Adjusting the voltage output by the power converter 110 (e.g., $V_{stud}$) by the voltage drop in the weld cable 126 (e.g., $V_{cableDrop}$) effectively raises the voltage at the wire feeder 104 (e.g., $V_{feeder}$). Thus, the example controller 112 may adjust the power (e.g., voltage and/or current) output by the power converter 110 to cause the voltage at the wire feeder 104 (e.g., effectively the weld voltage or arc voltage) to substantially match a voltage setpoint.

The example controller 112 adjusts the voltage setpoint (e.g., $V_{cmd}$) to determine an adjusted voltage setpoint $V_{adjustedcmd}$ (e.g., an adjusted voltage command) according to Equation 2 below.

$$V_{AdjustedCmd} = V_{cmd} + V_{cableDrop} \qquad \text{Equation 2}$$

To anticipate the voltage drop in the weld cable 126 $V_{cableDrop}$, the controller 112 determines a resistance $R_{cable}$ of the weld cable 126. When the resistance of the weld cable 126 is determined, the voltage drop in the weld cable 126 $V_{cableDrop}$ may be determined according to Equation 3 below:

$$V_{cableDrop} = I_{measure} * R_{cable} \qquad \text{Equation 3}$$

In Equation 3, $I_{measure}$ is the measured output current and $R_{cable}$ is the determined cable resistance of the weld cable 126. The welding power supply 102 includes a current sensor 162 to measure the output current during welding, and the controller 112 calculates the estimated voltage drop in the weld cable 126 to determine the adjusted voltage command $V_{adjustedcmd}$.

To determine the cable resistance $R_{cable}$, the controller 112 may use a filtered voltage feedback from the wire feeder 104 (e.g., an average measured voltage by the voltage monitor 152), a filtered voltage measurement at the output of the power supply 102 (e.g., an average measured voltage by the voltage monitor 160), and a filtered current measurement at the output of the power supply 102 (e.g., an average measured current by the current sensor 162). Using the power supply voltage and current measurements and the voltage feedback from the wire feeder 104, the controller 112 may use Equation 4 below to determine the cable resistance:

$$R_{cable} = \frac{V_{feeder} - V_{ps}}{I_{ps}}$$

In Equation 4, $V_{feeder}$ is the voltage feedback from the wire feeder 104 (e.g., an average measured voltage), $V_{ps}$ is

the measured voltage at the power supply 102 (e.g., an average measured voltage across the output terminals), and $I_{ps}$ is the measured current at the power supply 102 (e.g., an average measured current at the output terminals). The controller 112 may calculate and/or update the cable resistance $R_{cable}$ at the conclusion of a welding operation.

In cases in which the weld cable is first used, such as when the power supply 102 is first used and/or the weld cable 126 is replaced, the controller 112 does not have voltage feedback information or measured voltage and current to calculate the cable resistance $R_{cable}$. To compensate the output voltage for the voltage drop caused by the weld cable 126, the controller 112 may request the operator to input one or more characteristics of the weld cable 126 via the user interface 114. Example characteristics may include a model identifier of the weld cable 126, a length of the weld cable 126, a size (or gauge) of the weld cable 126, a serial number of the weld cable 126, and/or any other characteristic indicative of the conductivity characteristics of the weld cable 126.

When the controller 112 receives the characteristics input(s), the controller 112 estimates an initial cable resistance $R_{cable}$ for use in adjusting the voltage command value. For example, the controller 112 may look up the received characteristics in a lookup table and/or communicate with an external system to obtain the initial cable resistance value. The initial cable resistance value based on the characteristics may be updated, as disclosed above, at the conclusion of the initial welding operation based on voltage feedback and measured voltages and currents.

In some examples, the display 116 displays the weld voltage feedback information, such as the estimated weld voltage based on the calculated cable resistance, output voltage, and output current, for real-time viewing of the estimated weld voltage by an operator or other viewer of the power supply 102. Additionally, the user interface 114 may permit selection of the estimated weld voltage and/or the power supply output voltage for display on the display device 116. By displaying (or permitting display) of the real-time weld voltage during the weld, the operator, supervisor, and/or any other interested viewer can be assured that the weld voltage specified by the user is the weld voltage at the arc. Such assurance may be useful for verifying compliance with a weld procedure specification.

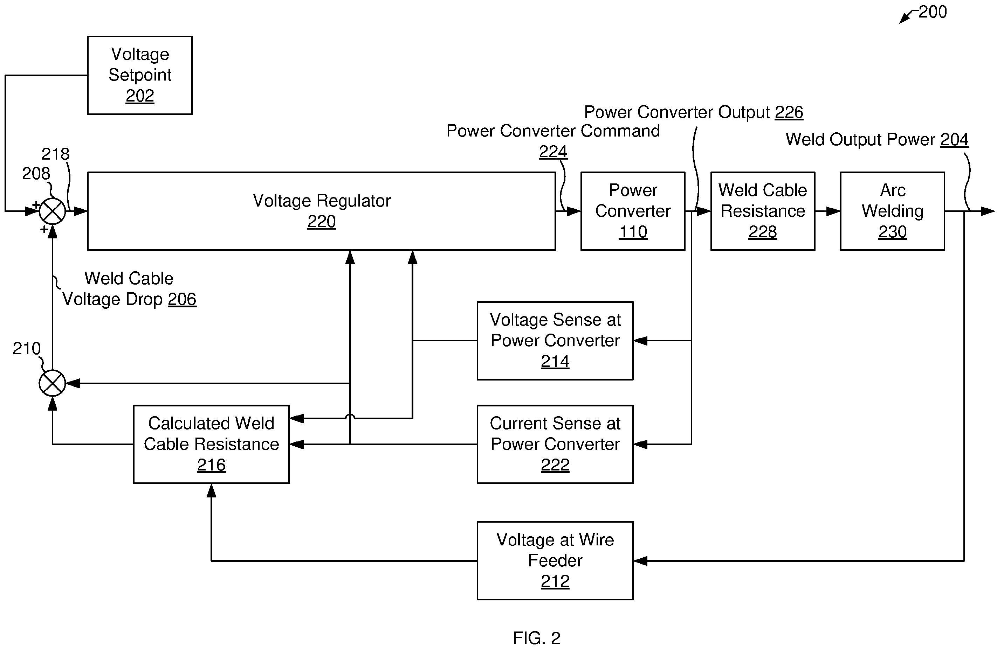

FIG. 2 is a block diagram of an example voltage feedback control loop 200 that may be implemented by the controller 112 of FIG. 1 to control the power converter 110. For example, the controller 112 may implement the control loop 200 by executing the instruction 125. The control loop 200 receives a voltage setpoint 202 as an input and generates a weld output power 204 that has substantially the same voltage as the voltage setpoint 202.

In the control loop 200, the voltage setpoint 202 is added to a weld cable voltage drop 206 using a summer 208. The weld cable voltage drop 206 is determined at a combiner 210 as a combination of a calculated weld resistance 216 and the sensed current 222 sensed at the power converter 110. The wire feeder voltage 212 is substantially identical to the voltage of the weld output power 204.

The summer 208 outputs a voltage error 218 to a voltage regulator 220. The voltage regulator 220 receives the voltage error 218, the voltage 214 sensed at the power converter 110, and a current 222 sensed at the power converter 110. The voltage regulator 220 outputs a power converter command 224 based on the voltage error 218, the voltage 214 sensed at the power converter 110, and the current 222 sensed at the power converter 110. The power converter command 224 controls the power converter 110 to generate an output power 226. The power converter 110 outputs the output power 226 to the weld cable 126, which has a corresponding weld cable resistance 228 in the control loop 200, and to a welding arc 230. The voltage 214 sensed at the power converter 110 and the current 222 sensed at the power converter 110 are measured substantially at the output of the power converter 110 to the weld cable 126.

The calculated weld cable resistance 216 is determined based on the voltage 212 sensed at the wire feeder, the voltage 214 sensed at the power converter 110, and the current 222 sensed at the power converter 110. The calculated weld cable resistance 216 may be updated at a significantly lower rate than the execution rate of the control loop 200.

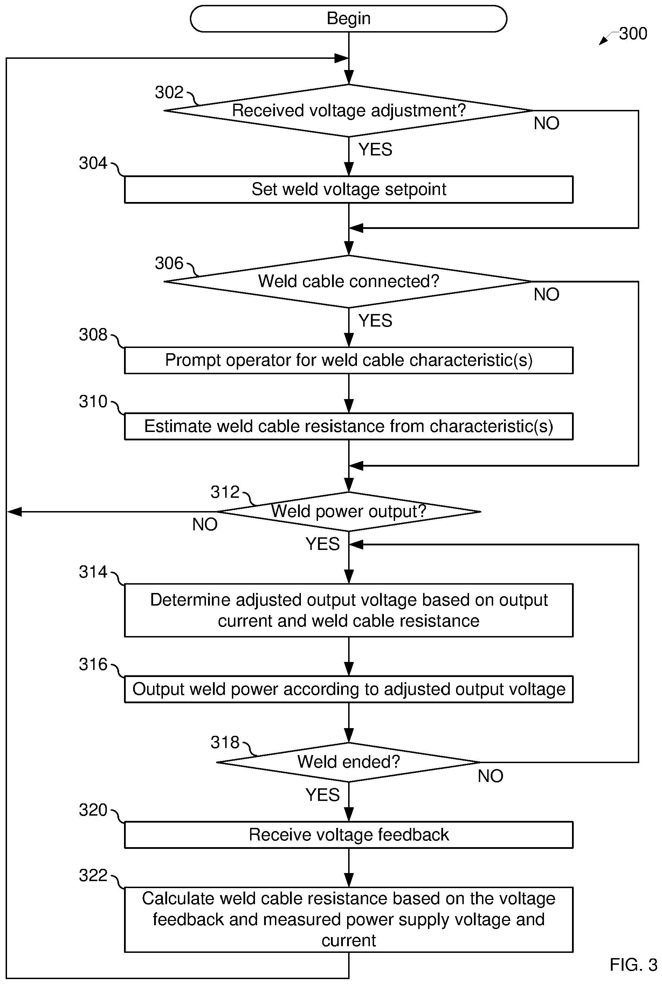

FIG. 3 is a flowchart representative of example machine readable instructions 300 which may be executed by the power supply 102 of FIG. 1 to compensate the welding output voltage for a weld cable resistance. The example instructions 300 may be performed by the controller 112 (e.g., by the processor 120).

At block 302, the example controller 112 determines whether a voltage adjustment has been received (e.g., via the user interface 114 of FIG. 1). For example, the user may adjust a setpoint voltage via the user interface 114 to indicate the desired arc voltage. If a voltage adjustment has been received (block 302), at block 304 the controller 112 sets the weld voltage setpoint based on the voltage adjustment.

After setting the weld voltage setpoint (block 304), or if a voltage adjustment has not been received (block 302), at block 306 the controller 112 determines whether a weld cable has been connected. For example, the controller 112 may determine whether a weld cable 126 and/or a work cable 148 have been connected to the welding power supply 102. If a weld cable has been connected (block 306), at block 308 the controller 112 prompts the operator for one or more weld cable characteristics. For example, the controller 112 may request an input from the operator describing one or more of cable length, cable size (e.g., gauge), cable model number, cable serial number, and/or any other information that may describe the weld cable 126 and/or the work cable 148. At block 310, the controller 112 estimates the weld cable resistance from the input characteristics. For example, the controller 112 may use a lookup table to determine an estimated weld cable resistance.

In some other examples, rather than prompting the operator for the cable characteristic(s), the controller 112 may allow the operator to manually enter the characteristics via the user interface 114. In some examples, the estimation of the weld cable resistance based on cable characteristics may be enabled and disabled by the operator. Upon enabling of the estimation of the weld cable resistance using cable characteristics, the user interface 114 may then prompt or allow the operator to enter the cable characteristics.

After estimating the weld cable resistance (block 310), or if a weld cable has not been connected (block 306), at block 312 the controller 112 determines whether weld power is being output (e.g., a weld has started). If weld power is not being output (block 312), control returns to block 302.

If weld power is being output (block 312), at block 314 the controller 112 determines an adjusted output voltage based on the output current and the weld cable resistance. For example, the controller 112 may determine the voltage drop $V_{cableDrop}$ due to the weld cable 112 based on the estimated or determined weld cable resistance cable resistance $R_{cable}$ and based on the output current measured by the current sensor 162. Based on the determined voltage drop $V_{cableDrop}$, the controller 112 may determine the adjusted voltage setpoint $V_{adjustedcmd}$ to obtain the desired voltage setpoint $V_{cmd}$ at the arc. At block 316, the controller 112 controls the power converter 110 to output the weld power according to the adjusted output voltage.

At block 318, the controller 112 determines whether the weld has ended. If the weld has not ended (block 318), control returns to block 314 to continue determining the adjusted output voltage.

When the weld ends (block 318), at block 320 the controller 112 receives voltage feedback from the wire feeder 104 (e.g., via the weld circuit and the communications transceiver 118).

At block 322, the controller 112 calculates the weld cable resistance based on the voltage feedback, and based on the measured power supply voltage and current. For example, the controller 112 may update the weld cable resistance using Equation 4 above. After calculating the weld cable resistance (block 322), control returns to block 302.

The present methods and systems may be realized in hardware, software, and/or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.

**Claims**

**1.** A welding-type power supply, comprising:

a power converter configured to convert input power to welding-type power based on a weld voltage setpoint and to output the welding-type power via a weld circuit;

a receiver circuit configured to receive a communication via the weld circuit while current is flowing through the weld circuit or after the current has stopped flowing through the weld circuit, the communication including weld voltage feedback information measured at a device remote from the power supply while the current is flowing through the weld circuit; and

a controller configured to:

for an initial weld performed with a weld circuit element:

determine an estimated weld circuit resistance value based on a characteristic of the weld circuit element; and
control the power converter according to a voltage feedback loop based on the estimated weld circuit resistance value; and

for a subsequent weld performed with the weld circuit element:

determine a calculated weld circuit resistance value based on the weld voltage feedback information; and
control the power converter according to the voltage feedback loop based on the calculated weld circuit resistance value to regulate a weld voltage at the remote device to the weld voltage setpoint.

2. The welding-type power supply as defined in claim 1, wherein the weld circuit element comprises a weld cable in the weld circuit or a work cable in the weld circuit.

3. The welding-type power supply as defined in claim 2, wherein the characteristic comprises at least one of a cable length, a cable size, a model identifier of the weld cable, or a serial number of the weld cable.

4. The welding-type power supply as defined in claim 3, wherein the controller is configured to determine the estimated weld circuit resistance value based on the characteristic using a lookup table.

5. The welding-type power supply as defined in claim 1, further comprising a voltage monitor configured to measure a voltage of the welding-type power, wherein the voltage feedback loop is based on the measured voltage.

6. The welding-type power supply as defined in claim 5, further comprising a current sensor configured to measure a current of the welding-type power, wherein the voltage feedback loop is based on the measured current.

7. The welding-type power supply as defined in claim 6, wherein the controller is configured to determine the calculated weld circuit resistance value based on the measured voltage, the measured current, and the weld voltage feedback information.

8. The welding-type power supply as defined in claim 5, wherein the weld voltage feedback information comprises a filtered arc voltage of the welding-type power measured at a wire feeder, the voltage monitor is to determine a filtered power supply output voltage of the welding-type power measured at an output terminal of the welding-type power supply, and the controller is to adjust the weld voltage of the welding-type power based on a difference between the filtered arc voltage and the filtered power supply output voltage.

FIG. 1

EP 4 552 782 A1

FIG. 2

EP 4 552 782 A1

FIG. 3

**Europäisches Patentamt**
**European Patent Office**
**Office européen des brevets**

# EUROPEAN SEARCH REPORT

Application Number

EP 24 20 9052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 11 027 355 B2 (ILLINOIS TOOL WORKS [US]) 8 June 2021 (2021-06-08) * figures * ----- | 1-8 | INV. B23K9/095 B23K9/10 |
| Y | US 2018/257161 A1 (ANDERS ADAM E [US] ET AL) 13 September 2018 (2018-09-13) * paragraph [0061]; figures * ----- | 1-8 | |

**TECHNICAL FIELDS SEARCHED (IPC)**

B23K

The present search report has been drawn up for all claims

| Place of search | Date of completion of the search | Examiner |
|---|---|---|
| Munich | 31 March 2025 | Caubet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9052

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2025

| Patent document cited in search report | | Publication date | Patent family member(s) | | Publication date |
|---|---|---|---|---|---|
| US 11027355 | B2 | 08-06-2021 | CA | 3053586 A1 | 13-09-2018 |
| | | | CN | 110382152 A | 25-10-2019 |
| | | | EP | 3592495 A1 | 15-01-2020 |
| | | | US | 2018257162 A1 | 13-09-2018 |
| | | | US | 2021252625 A1 | 19-08-2021 |
| | | | WO | 2018164868 A1 | 13-09-2018 |
| US 2018257161 | A1 | 13-09-2018 | CA | 3053579 A1 | 13-09-2018 |
| | | | CN | 110382153 A | 25-10-2019 |
| | | | EP | 3592496 A1 | 15-01-2020 |
| | | | US | 2018257161 A1 | 13-09-2018 |
| | | | WO | 2018164867 A1 | 13-09-2018 |

For more details about this annex : see Official Journal of the European Patent Office, No. 12/82

**EP 4 552 782 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63593701
- US 9012807 B